# EUROPEAN PATENT APPLICATION

(11) **EP 2 899 675 A1**
(43) Date of publication of application: **29.07.2015**
(21) Application number: 14397514.2
(22) Date of filing: 17.04.2014
(51) Int. Cl.: G06Q 10/00

(54) **A method, a device, a computer program for implementing electronic service requests**

(30) Priority: 24.01.2014 FI 20145072
(71) Applicant: Aktiiviklubi Oy, 74100 Iisalmi (FI)
(72) Inventor: Riihola, Kari, 74100 Iisalmi (FI)
(74) Representative: Tampereen Patenttitoimisto Oy

(57) **Abstract**

The invention relates to a method, a device and a computer-readable storage means for implementing electronic service requests. In the method, a customer device comprising a customer program is positioned in the premises of a service provider; service content relating to the service provider is transmitted to the customer program of the customer device, which service content comprises at least operations relating to the service provider; a request is received from the customer program of the customer device, which request relates to at least one operation in the received content; a recipient is determined for the request; the request is sent to a specific recipient.

## Description

### Field of the invention

The present invention relates to a method, a device and a computer program for implementing electronic service requests.

### Background of the invention

There are solutions that have clearly improved a customer's possibilities for calling a salesperson, a waiter or some other member of the personnel of a service provider. For example, in large supermarkets in different departments there may be a push button for the customer to call a salesperson. Another example is a push button on a restaurant table, which includes operations depending on the reason the customer wants to call the waiter, for example, "I am ready to order", "I want to pay my bill", "Other request". Yet another example is an electronic device provided by a restaurant to a customers, such as a tablet computer, which provides the menu of the restaurant and through which the customer may place their order.

### Brief summary of the invention

The present invention provides an improved method and system and computer program for calling a salesperson, a waiter or some other member of the personnel of a service provider.

According to an example, in a method for implementing electronic service requests, a customer device comprising a customer program is positioned in the premises of a service provider; service content related to the service provider is transmitted to the customer program of the customer device, which service content comprises at least operations relating to the service provider; a request is received from the customer program of the customer device, which request relates to at least one operation in the received content; a recipient is determined for the request; the request is sent to the determined recipient.

According to another example a device for implementing electronic service requests comprises a processor and a memory for storing computer program code. Said processor, when running the computer program code, causes the device perform the following operations: positioning a customer device comprising a customer program in the premises of a service provider; transmitting content relating to the service provider to the customer program of the customer device, which content comprises at least operations relating to the service provider; receiving a request from the customer program of the customer device, which request relates to at least one operation in the content; determining a recipient for the request; sending the request to the determined recipient.

According to a third example, computer commands, which are programmed to a computer-readable storage means, cause: positioning a customer device comprising a customer program in the premises of a service provider; transmitting content relating to the service provider to the customer program of the customer device, which content comprises at least operations relating to the service provider; receiving a request from the customer program of the customer device, which request relates to at least one operation in the content; determining a recipient for the request; sending the request to the determined recipient.

In addition, according to an embodiment, a customer using the customer device is identified.

According to an embodiment, in the method a successful response to a request is detected by receiving an acknowledgement from the customer device.

According to an embodiment, a successful response to a request is detected by identifying the proximity between a recipient's device and the customer device.

According to an embodiment, an acknowledgement is received of a successful service event.

In addition, according to an embodiment, the time used for a service event is measured.

According to an embodiment, a device implementing the method is on a cloud server.

According to an embodiment, a device implementing the method is a mobile device.

### Description of the drawings

The invention will be described more in detail with reference to the appended figures, in which
- Fig. 1: shows a system according to an embodiment in a simplified manner;
- Fig. 2: shows different user interface views according to an embodiment;
- Fig. 3: shows a user interface template for a customer program, according to an embodiment
- Fig. 4: shows data content on a server of a service program, according to an embodiment
- Fig. 5: shows a method according to an embodiment, in a block chart;
- Fig. 6: shows a method according to an embodiment in a flow chart, and
- Fig. 7: shows a system according to yet another embodiment.

### Detailed description of the invention

The present invention is described by using as an example a shop with a salesperson working at the shop and a customer of the shop. It is, however, obvious that the invention may be utilized in any service environment, where a customer wishes to contact a representative of a service provider. Example environments, in addition to a shop, include a restaurant, a hotel, a spa, a hospital, a public event, or any event and/or place where a service provider and a person needing service are to be brought together. In the description of the invention the term "service area" is used to describe that servicer provider environment where the service recipient ("customer") may be identified. The term "service provider" relates to a service/service entrepreneur, such as a shopkeeper, a restaurateur, a hotel, a store, etc. In this context, a "service producer" relates to an owner/controller/producer of a service program according to embodiments of the invention.

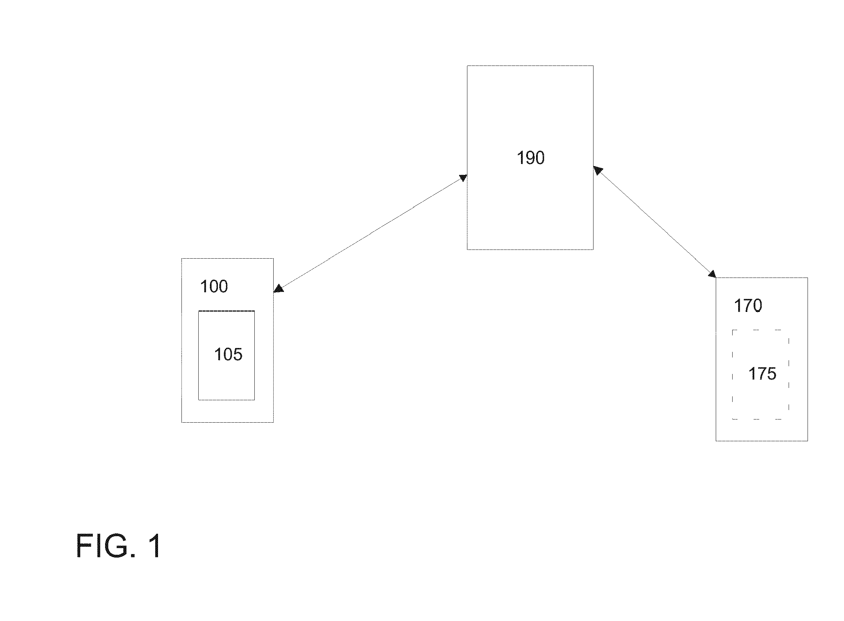

Figure 1 shows a system according to an embodiment. In this system the customer has an electronic device 100, which may be a tablet computer, a mobile phone, a portable computer, or some other device capable of wireless communication. The electronic device comprises at least a memory for storing a computer program, a processor for running the computer program, one or more types of communication means for receiving and sending data, a display for showing data. The electronic device may also comprise other means, such as media playback/storage means, means for entering data if the display does not function as such means, positioning means, different programs, etc. One of the programs of the electronic device 100 is a customer program 105 for calling a salesperson.

The system according to this embodiment further comprises a server, such as a cloud server 190, which stores data relating to the service and produced by the service providers, as well as service programs handling this data. In addition, the cloud server may store customer profiles for identifying customers. According to an embodiment, instead of a cloud server 190, or in addition to it, there is the service provider's server device for storing some or all of the above-mentioned data. The invention is described from the point of view of such a system that comprises said cloud server. It is, however, to be understood that the examples can also be arranged to a server device of a service provider or a mobile device.

The system further comprises an electronic device 170 of the service provider's personnel, which may be a tablet computer, a mobile phone, a portable computer, or some other device capable of wireless communication. This device 170 may comprise its own request response program 175, or the device 170 may receive requests by some other known communication means, for example as SMS (Short Message Service), MMS (Multimedia Messaging Service), IM (Instant Message), or the like. The device 170 may also be some other receiver than a mobile phone or the like. As an example can be mentioned a wristband implemented for the purposes of receiving a request. The term "receiving device" is used for the electronic device 170 of the personnel.

The receiving device 170 and the customer's electronic device 100 are arranged to communicate with the cloud server 190 via a wireless transmission network, for example WLAN (Wireless Local Area Network, Bluetooth or mobile communication networks implemented by current (GSM, CDMA or WCDMA) or future techniques.

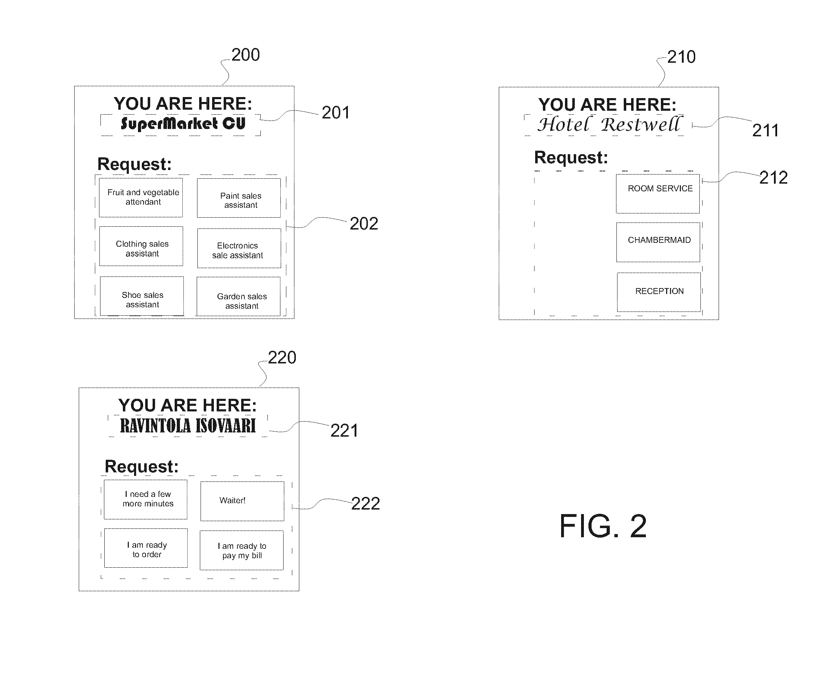

Figure 2 shows examples of user interface views of a customer program 105 of an electronic device 100 for the needs of different service providers. Each user interface 200, 210, 220 comprises a field 201, 211, 221 for showing the logo/name of the service provider. In addition to this, each user interface comprises a field 202, 212, 222 with functionalities for service provider request situations. For example, request needs of a shop relate to the personnel responsible of different departments, in which case the field 202 shows push buttons for calling these responsible members of personnel. In a hotel user interface 212 the requests may also be allocated to different recipients, and in a restaurant user interface 222 the requests relate to the state of service for the customer in question.

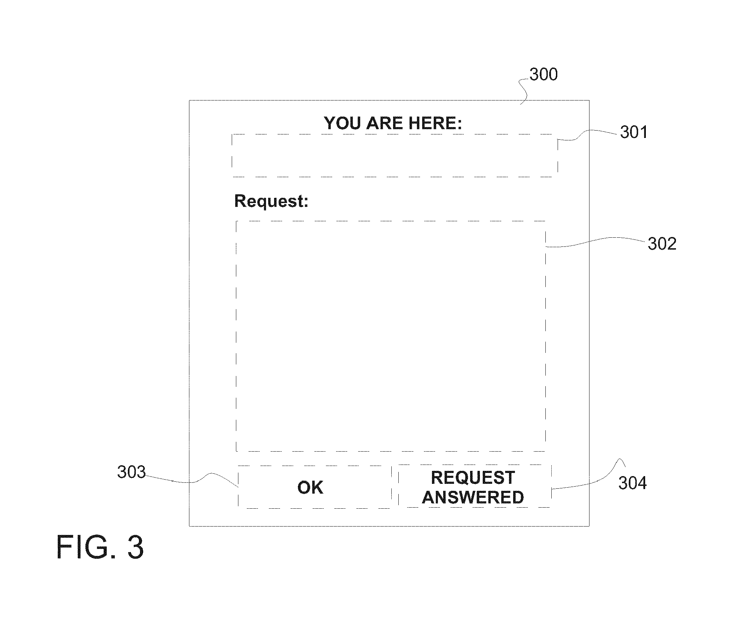

Instead of the customer having different customer programs for each above-mentioned service, according to an embodiment of the invention the customer program is an adaptive customer program, where the content of the user interface adapts according to the customer's location. Figure 3 shows the content of a customer program user interface 300 before the customer has been positioned. It can be detected that the user interface functions as a user interface template before the customer has been positioned in the premises of a service provider ("service area"). The user interface 300 comprises a changeable field 301, which will show the name/logo of that service provider, where the customer has been positioned. In addition, the user interface 300 comprises a changeable field 302, which will show all the request situations that may arise when the customer deals with the service provider in question. The content of both fields 301, 302 is received from the service program from the cloud server.

When taking into account this embodiment, the user interface contents shown in figure 2 are different contents of the same customer device and same customer program, which have been received from a cloud server from content produced by corresponding service providers.

With reference to figure 2, when a customer enters the shop "Supermarket CU", the text/logo "Supermarket CU" is provided to the user interface shown in figure 3 (see figure 2: 201). In addition to this, field 302 shown in figure 3 is provided from a cloud server with the operations (push buttons) for requesting "Fruit and vegetable attendant", "Clothing sales assistant", "Shoe sales assistant", "Paint sales assistant", "Electrical sales assistant", "Garden sales assistant".

When the same customer arrives at the restaurant "Ravintola Isovaari", the same field 301 of the user interface shown in figure 3 is provided with the text/logo "RAVINTOLA ISOVAARI" (see figure 2: 221). In addition to this, the field 302 shown in figure 3 is provided with the operations (push buttons) "I need a few more minutes", "I'm ready to order", "Waiter!", "I'm ready to pay". In other words, the customer has one customer application (figure 3), where the content is adapted according to the location of the customer.

This is implemented by utilizing one or more known positioning methods. When a customer arrives in the premises of a service provider, such as a shop ("service area"), this is identified in a cloud server. Positioning may be implemented by a precise indoor positioning, but positioning based on mobile communication network, satellites, WLAN or Bluetooth also provides the appropriate preciseness. Yet another alternative is an identification program in the customer device, where the user has allowed his/her position to be determined. In some cases the customers themselves may state their location at the moment, for example, by selecting a service provider provided in a map application of an electronic device.

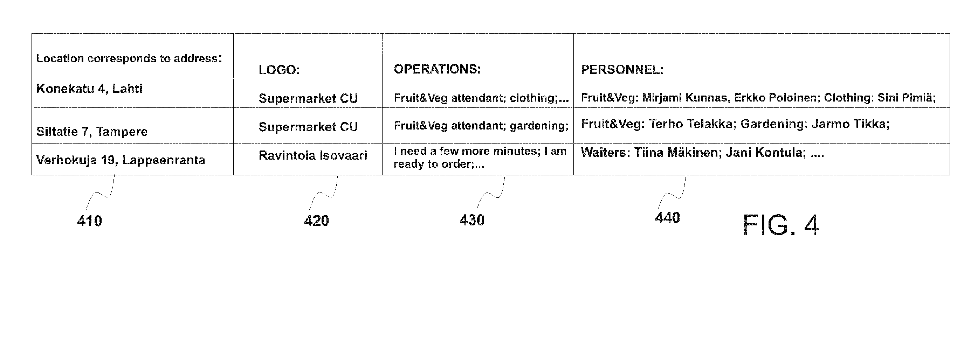

As a result of positioning the customer, a cloud server is configured to search the content of a service provider corresponding to the location, i.e. the operations and data to be shown in the user interface of the customer program. The cloud server has stored data of those service providers who have registered the present service program for their use. In connection with the registration, the location of the service provider or units of the service provider are determined. At the same time, the persons working in these locations are determined, as well as their receiving devices and expertise. In addition, the service provider provides the cloud server with the data that is to be shown on the customer device. If desired, the service provider may also transfer their customer register to the cloud server, but the customer register may also be stored on the service provider's own device. Figure 4 shows an example of a spreadsheet, with which the necessary data can be stored in the cloud server. The first column 410 provides addresses corresponding to the identified location of the customer. In this column the location may be provided by any suitable positioning means, such as address, coordinates, cell of a mobile communication network, etc. The next column 420 comprises the logo of the service provider in the location in question. It is to be noted that in this example Supermarket CU is located in two different locations, and both of these have their own lines, since it is likely that the persons working in these locations are different and because the locations may provide different services. The next column 430 lists the operations the service provider in question provides. This data together with the logo data of column 420 is provided to an identified customer device to be shown on the user interface. In addition, the cloud server has stored a list of employees for each service provider by department/expertise/role. This column may, in addition, comprise different status data on the work status of the person in question. For example, when an employee comes to work and activates the service on, the employ-ee in question can then be identified by a status marker. Depending on the situation, the cloud server may also comprise other information. In figure 4 data is shown for reading purposes. It is, however, clear that this data does not need to be in a readable form, but it may be shown in bits and bytes.

When a customer is identified in a service area, content saved on the cloud server and corresponding to the location of the customer is sent to the customer's customer program. The sent content comprises the name of the service provider as text/figure to be shown on the customer program, as well as the request alternatives/situations that may arise in the shop in question (cf. situations 202, 212, 222 shown in figure 2 and columns 420, 430 in figure 4). The sent content may be sent in the language the customer uses (the language settings will be described in the following).

In this context the cloud server may also identify the customer, if the customer has allowed it, for example, by creating a customer profile. Thus, for example the language used by the customer may be identified from the customer profile. If there is no customer profile, the language in use can be searched, for example, from the language settings of the customer device. In addition, it is possible in this connection to check the customer's purchase history and other buying behaviour from the customer management system of the service provider.

When the customer needs to request the personnel's help, the customer will select the appropriate operation from the customer program. For example, at the electronics department the customer will receive help by requesting for "Electronic sales assistant". According to an embodiment, the customer may also select from the user interface whether they want a) the salesperson to come to the customer; b) to be guided by vocal guidance to the salesperson; or c) to be guided to the salesperson by a map application. The default setting - and as is described in the following - is alternative a) where the salesperson comes to the customer.

From the customer program the request is transferred to the cloud server, from where it transfers further to the device/devices of the person/persons who are in charge of the electronics department in the shop in question and whose status is active at the moment. This information is stored on the cloud server (see e.g. figure 4: column 440) by the service provider. The request may be transferred to the response program of the recipient/recipients, or it may be transferred as an SMS, MMS or IM to the receiving device of the recipient: "Help needed in electronics department".

According to another embodiment the request made by a customer is listed in a cloud server in a request list, from where a member of the service provider's personnel may select the next customer request in line. Thus, the request message does not necessarily have to be sent from the cloud server to a receiving device. According to a further embodiment, a request from a cloud server is transmitted to all receiving devices, in which case the request is a notification of a customer request added to the list. As a result of this, any one of those who received the request may go and select the request they are replying to.

After receiving a request the recipient may acknowledge the receipt of the request to the cloud server and that the recipient will help the customer. It is also possible that no acknowledgement message is sent but the recipient goes to the customer and the customer acknowledges the receipt of help. According to an embodiment an acknowledgement is sent automatically, when it is detected that the customer's device and the request recipient's device are close enough to each other. The proximity of devices may be detected by utilizing, for example, signal strength measured by means of Bluetooth (RSSI, Received Signal Strength Indication) or by means of indoor positioning.

According to an embodiment, when a cloud server transmits a request message to the device of a member of their staff, the cloud server begins to measure the duration of the service. The duration of the service is affected by, for example, the time it takes for a member of the staff from receiving the request to reach the customer, and/or the time it takes to fulfil the needs of the requesting customer. For the latter, the customer program may comprise a push button, by which the requesting customer may indicate that the service event has been successful. As an example of optional push buttons, figure 3 comprises push buttons 303, 304. The measured duration may be reported to the device of the service provider and, in addition, optionally to the personnel's receiving device. Also other analyses related to business may be performed on the basis of data collected by the cloud server.

In addition to what is mentioned above, after receiving service the customer has the possibility to provide feedback separately. The time for providing such feedback may be limited to, for example, 5 minutes from the moment the customer has received the requested service and/or from when the service provider's representative has responded to the request.

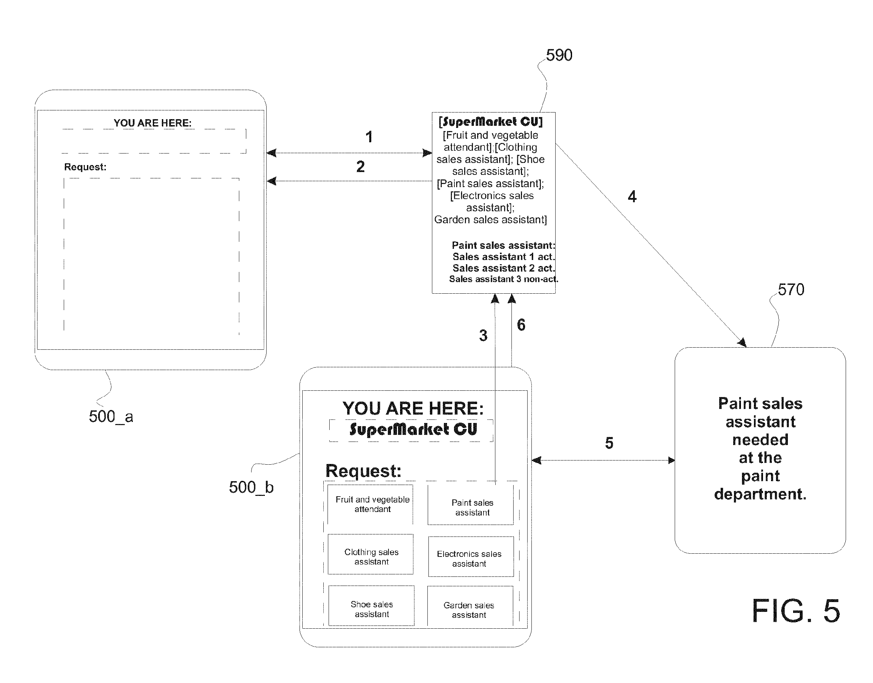

Figure 5 shows the phases of a method according to an embodiment. A customer device is referred to by reference numbers 500_a, 500_b. These describe two different states of a customer program of one customer device. A cloud server is referred to by reference number 590 and a receiving device of a service provider's personnel by reference number 570. In the method the cloud server 590 detects the presence of a customer device 500_a. In this connection the customer may be identified and the customer's language settings checked from either a customer profile of from the language settings of the customer device or customer application. Identification may take place by any known identification method or some other personal identification, such as chip identification. After positioning the cloud server 590 sends 2 to the customer device 500_a data relating to the service provider corresponding to the location. The customer device 500_b shows the data in its user interface.

From the user interface of the customer application of the customer device 500_b the customer selects, for example, the operation: "Request: Paint sales assistant", of which a message 3 is transmitted to the cloud server 590. The cloud server 590 selects that sales assistant from the paint sales assistants who is active "Sales assistant 1 act" or "Sales assistant 2 act." and transmits 4 a message to the receiving device 570. As a result of this, the user of receiving device 570 goes to the customer. When the proximity of the receiving device 570 and the customer device 500_b is detected 5, the receipt of help is acknowledged 6 to the cloud server 590. In this embodiment the acknowledgement 6 is sent from the customer device 500_b. It is, however, possible that the acknowledgement is sent from the receiving device 570 or from some other external system.

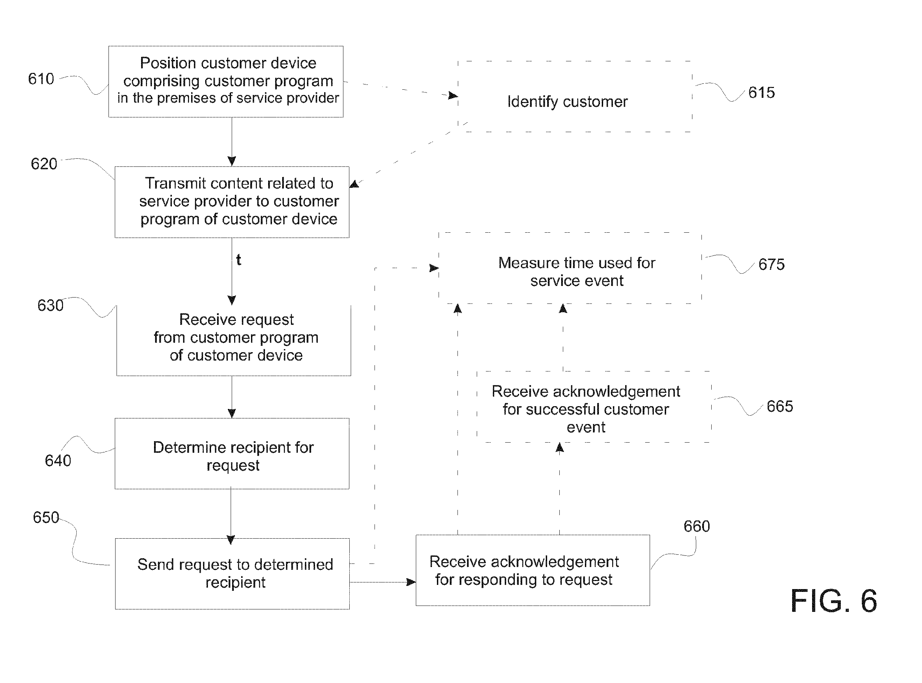

A method according to an embodiment from the point of view of a cloud server is described in figure 6 by means of a flow chart. In the method:
- a customer device comprising a customer program is positioned in the premises of a service provider 610;
- content relating to the service provider is transmitted to the customer program of the customer device 620;
- a request is received from the customer program of the customer device 630;
- a recipient is determined for the request 640;
- the request is sent to the determined recipient 650;
- acknowledgement of receipt of help is received 660.

Optional method phases in the flow chart of figure 6 are shown by dashed lines. According to these, in the method is further implemented one or more of the following phases:
- identifying a customer 615;
- measuring the time used in the service event 675;
- receiving acknowledgement of a successful service event 665.

Measuring the time used for the service event is based on the time between sending the request 650 and the acknowledgement 660 and/or receiving the acknowledgement 665.

It is to be noted that time t may elapse between phases 620 and 630.

It is also possible to simplify the idea of the invention, in which case it may be applied in pre-orders. In this type of cases a customer program may list service providers registered in a cloud server, from which the customer may place pre-orders. Let us take an example with a grocery shop Supermarket CU, where the customer places a pre-order through a customer program. The order proceeds from a cloud server to a device of the service provider's personnel, as a result of which a member of the personnel may prepare the order. When the customer comes to collect the order, the cloud server identifies the customer in the service provider's premises and sends an identifier together with the above-described user interface data, by means of which identifier the customer may either request the personnel to bring the ordered products or request the storage system so that in response to the identifier the storage system releases the ordered products. Thus, (for example relating to figure 6) before phase 610 there is a phase "receiving a pre-order", after which phases 610 to 675 may take place according to figure 6. Thus, the "content" is, for example, an identifier and the "request" is transmitting the identifier to the recipient or the storage system for delivering the order. The customer may similarly provide feedback on a successful service.

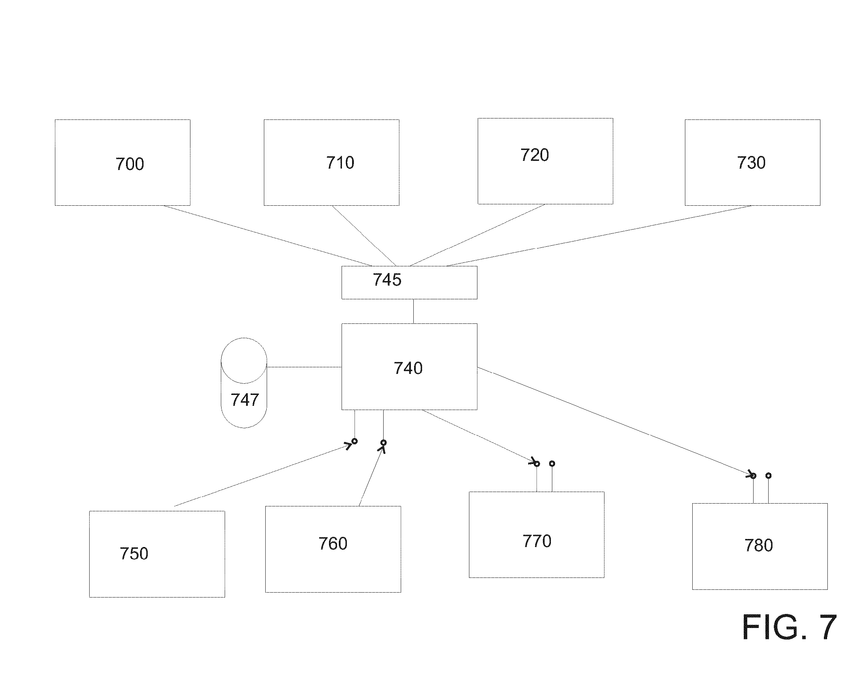

Figure 7 shows a system according to yet another embodiment. The system comprises an electronic device 700 of a customer, which comprises a customer program and a private user interface connected to it. The system may further comprise a display device 710 of a service provider, which comprises a public customer program and a user interface. In addition, there is an electronic device 720 of the personnel, which comprises the personnel's program and its user interface. Further, there is an office device 730, which comprises an office program and its user interface. In some connections the personnel's program and the office program may be in the same device.

Figure 7 shows a background system, which comprises a functional backup system 740 of a service management program and system. There is an interface 745 between this and devices 700, 710, 720, 730 (for example in the case of a cloud service Rest API (Representational stat transfer Application programming interface)) which provides the services of the system to user interfaces in a specific manner. The interface 745 enables a cost-efficient scaling on the user interface level. It is clear that an interface according to interface 745 may also be between a backup system 740 and third party systems (770, 780, 760, 750). The backup system 740 of the service management program may further be connected to database 747. The database may comprise product information, customer information, or the like. Alternatively the background system of the service management program may be connected to third party systems for providing product and customer information. These third party systems may be a customer management system 770, a product information system 780, an operation management system 760, an integration bus (Enterprise Service Bus) 750, etc. For these the background system 740 of the service management program comprises a public interface for the integration needs of third party programs.

One embodiment of the invention is described more in detail in the following detailed method description. In order to use the service, the customer must register to the service. This takes place by providing, for example, a unique identifier of a mobile device and a permission to transfer from the mobile device the information needed by the service when the mobile device enters the premises of a service provider (service area). The unique identifier of the mobile device may be the IMEI code (International Mobile Equipment Identity) of the phone or a MAC identifier (Media Access Control) of a portable work station, or some other sufficiently unique device identifier. Registration to the service takes place on the web page of the service producer.

When a mobile device enters a service area of a service provider, it is identified by means of the network connection of each mobile device. For example, a mobile phone (IMEI) is identified on the basis of location data, which is transmitted through the 3G/4G location service of a telephone operator. Devices with a MAC identifier are identified by means of WLAN stations placed in the service area. In spaces where the 3G/4G network location service does not provide a sufficiently unique location (e.g. there are several service areas of different service providers in the same space close to each other), the location accuracy may be improved by sub-transmitter identifiers (amplifiers). The identification may also be made by RFID (Radio Frequency Identification). For example, in a festival area, the tables have the above-mentioned RFID identifiers, in which case said "service area" comprises the table in question.

Once the service producer receives information that a customer has arrived at the service area, the service producer sends information to the mobile device and asks the customer whether they wish to receive the service content provided to the service area by the service provider. After receiving a positive reply, the service producer uploads the service content of the service provider to the mobile device and transmits to the service provider information on establishing a connection between the customer and the service provider. The service operation may be either an HTML/XML page, an applet or some other corresponding application for a mobile device, or a communication link, which enables communication between a customer and a service provider/service producer.

In the above, a customer program installed on a customer computer has been described. It is also clear that instead of a customer program, a service located in a cloud server may be used by a browser, where (e.g. HTML-based) content varies according to the service provider the current location of the customer corresponds to. Similarly, the personnel may use a browser for browsing and receiving requests. In addition to this, the operations of a cloud server may also be delivered to be performed by a server device of the service provider. Thus, each service provider stores their own data on their own server device and the selection of data being sent to a customer device does not necessarily need to be performed separately on a server.

Further, instead of the above customer device or in addition to it there may be a public display device in the premises of the service provider, which comprises the above-mentioned content of the customer program in a public user interface. The above-described operations may be shown and implemented by means of this kind of public user interface. Thus, in the method the content relating to a service provider is transmitted to the customer program of the display device, which content comprises at least operations relating to the service provider. In addition, the content comprises information on the service provider's personnel currently at work as well as possibly their expertise. From this display device the customer may transmit a request (e.g. a request for a specific employee) e.g. from a touch screen of the device or, for example, from a customer program on the customer device. In the service program of the server is determined a recipient for the request, to whom the request is further sent. The response to the service request and success of the service event can be measured as described above.

The above-described embodiments of the invention may be made more effective, for example, by following the customer's route in the premises of the service provider, if this has been separately allowed.

The different embodiments of the invention may be implemented by means of computer program code. For example, the customer device comprises a processor and a memory comprising computer program code. In addition to this, the customer device may comprise a microchip and electronics for receiving, handling and sending information. When running the computer program code the processor makes the customer device implement different embodiments of the invention.

In addition, the receiving device of the service provider's personnel comprises a processor and a memory comprising computer program code. In addition to this, the service provider's device may comprise a microchip and electronics for receiving, handling and sending information. When running the computer program code the processor makes the service provider's device implement different embodiments of the invention.

Further the system device/devices of the service producer comprise a processor and a memory comprising computer program code. In addition to this, the service producer's device may comprise a microchip and electronics for receiving, handling and sending information. When running the computer program code the processor makes the service provider's device implement different embodiments of the invention.

It is clear that the present invention is not limited solely to the above-presented embodiments, but it can be applied within the scope of the appended claims.

## Claims

1. A method for implementing electronic service requests, **characterized in that** the method comprises
- positioning (510) a customer device (100) comprising a customer program (105) in the premises of a service provider;
- transmitting (520) a service content relating to the customer program (105) of the customer device (100), which service content comprises at least operations relating to the service provider;
- receiving (530) a request from the customer program (105) of the customer device (100), which request relates to at least one operation in the received content;
- determining (540) a recipient (170) for the request;
- sending (550) a request to the determined recipient (170).

2. The method according to claim 1, **characterized in that** the method further comprises identifying (515) a customer using the customer device (100).

3. The method according to claim 1 or 2, **characterized in that** in the method a successful response to a request is detected by receiving (565) an acknowledgement from the customer device (100).

4. The method according to claim 1 or 2, **characterized in that** in the method a successful response to a request is detected by identifying the proximity between the recipient device (170) and the customer device (100).

5. The method according to any of the preceding claims 1 to 4, **characterized in that** the method further comprises receiving (565) an acknowledgement for a successful service event.

6. The method according to any of the preceding claims 1 to 5, **characterized in that** the method further comprises
- measuring (575) the time used for the service event.

7. The method according to any of the preceding claims 1 to 6, **characterized in that** the method is implemented on a cloud server.

8. The method according to any of the preceding claims 1 to 7, **characterized in that** the method is implemented on a mobile device.

9. A device for implementing electronic service requests, which device comprises a processor and a memory for storing computer program code, **characterized in that** when running the computer program code the processor causes the device to perform the following operations:
- positioning (610) a customer device (100) comprising a customer program (105) in the premises of a service provider;
- transmitting (620) a service content relating to the customer program (105) of the customer device (100), which service content comprises at least operations relating to the service provider;
- receiving (630) a request from the customer program (105) of the customer device (100), which request relates to at least one operation in the content;
- determining (640) the recipient (170) of the request;
- sending (650) the request to the determined recipient (170).

10. The device according to claim 9, **characterized in that** the device is further arranged to identify (515) a customer using the customer device (100).

11. The device according to claim 9 or 10, **characterized in that** the device is arranged to detect a successful response to a request either receiving (565) an acknowledgement from the customer device (100) or by identifying the proximity between the customer device (100) and the recipient device (170).

12. The device according to any of the preceding claims 9 to 11, **characterized in that** the device is further arranged to receive an acknowledgement for a successful service event.

13. The device according to any of the preceding claims 9 to 12, **characterized in that** the device is further arranged to measure (575) the time used for a service event.

14. The device according to any of the claims 9 to 13, **characterized in that** the device is one of the following: a cloud server, a server device of the service provider, a mobile device.

15. A computer-readable storage means, into which are programmed computer commands, **characterized in that** the computer commands, when executed on a computer, implement:
- positioning a customer device (100) comprising a customer program (105) in the premises of a service provider;
- transmitting a service content relating to the service provider to the customer program (105) of the customer device (100), which service content comprises at least operations relating to the service provider;
- receiving a request from the customer program (105) of the customer device (100), which request relates to at least one operation in the content;
- determining the recipient (170) of the request;
- sending the request to the determined recipient (170).
